# EUROPEAN PATENT SPECIFICATION

(11) **EP 2 460 874 B1**
(45) Date of publication and mention of the grant of the patent: **14.10.2015**
(21) Application number: 11191563.3
(22) Date of filing: 01.12.2011
(51) Int. Cl.: B01D 15/38

(54) **Method of separating target cell in biological sample**
Verfahren zum Trennen der Targetzelle in einer biologischen Probe
Procédé pour séparer des cellules cibles dans un échantillon biologique

(30) Priority: 01.12.2010 KR 20100121333; 28.10.2011 KR 20110111416
(43) Date of publication of application: 06.06.2012
(73) Proprietor: Samsung Electronics Co., Ltd., Suwon-si, Gyeonggi-do, 443-742 (KR)
(72) Inventor: Park, Jong-myeon, Gyeonggi-do (KR)
(74) Representative: Grünecker Patent- und Rechtsanwälte PartG mbB

(56) References cited:
- US-A- 5 474 687
- US-A- 5 840 502
- US-A1- 2003 124 719
- KALLERGI GALATEA ET AL: "Phosphorylated EGFR and PI3K/Akt signaling kinases are expressed in circulating tumor cells of breast cancer patients.", BREAST CANCER RESEARCH : BCR 2008, vol. 10, no. 5, 2008, page R80, ISSN: 1465-542X
- UEN ET AL: "Clinical significance of MUC1 and c-Met RT-PCR detection of circulating tumor cells in patients with gastric carcinoma", CLINICA CHIMICA ACTA, ELSEVIER BV, AMSTERDAM, NL, vol. 367, no. 1-2, 1 May 2006 (2006-05-01) , pages 55-61, XP005387151, ISSN: 0009-8981, DOI: 10.1016/J.CCA.2005.11.013
- MITRA TEWES ET AL: "Molecular profiling and predictive value of circulating tumor cells in patients with metastatic breast cancer: an option for monitoring response to breast cancer related therapies", BREAST CANCER RESEARCH AND TREATMENT, KLUWER ACADEMIC PUBLISHERS, BO, vol. 115, no. 3, 5 August 2008 (2008-08-05), pages 581-590, XP019671168, ISSN: 1573-7217

## Description

### BACKGROUND

### 1. Field

The present disclosure relates to methods of separating a target cell in a biological sample.

### 2. Description of the Related Art

The majority of deaths associated with malignant tumors are due to the metastasis of primary tumor cells to tissues and organs distant from the initial tumor. Accordingly, early diagnosis of metastasis is a critical factor for the survival of a cancer patient, and early diagnosis of a tumor and monitoring of tumor growth are considered to be very important factors for successful treatment of a cancer patient. Cancer diagnosis usually involves diagnosis techniques related to histopathology. A histopathological diagnosis technique is a method of using a tissue sample from a living subject to diagnose cancer. Such a histopathological approach allows a tumor cell to be directly observed. However, the histopathological approach may be inaccurate in determining whether there is a tumor, since the sample tissue site selected is obtained from a living subject, and only data about the particular site obtained from the living subject is obtained. Thus it can be difficult to know whether a tumor has metastasized to another site. For this reason, the applicability of the histopathological diagnosis technique in diagnosing and monitoring tumors may be limited.

Circulating tumor cells (CTCs) may be found in a patient before a tumor is initially detected. Accordingly, CTCs may play an important role in early diagnosis and prognosis of cancers. In addition, because cancer usually metastasizes through the blood, a CTC may be a marker for determining whether cancer has metastasized. Even after cancer cells have been removed by surgery, CTCs may still be found. In this case, this may indicate that cancer may reoccur. However, very small numbers of these CTCs are found in blood and the cells are themselves weak. It is thus very difficult to detect them and determine the number of the cells. Accordingly, there still remains a need for a diagnosis method that is highly sensitive with respect to detection of CTCs, cancer cells, or cancer stem cells in a patient's body.

The related art discloses a method of separating red blood cells, white blood cells, circulating cancer cells, and serum to manually separate a desired layer from them and use it. However, white blood cells and circulating cancer cells are not individually separated and exist as a mixture when the technology is used, and thus the method is disadvantageous in that the separation efficiency of white blood cells and circulating cancer cells is theoretically limited.

Other related art discloses cell margination and multi-orifice separation based on the principles of fluid dynamics. The former is a technology whereby the number of small cells such as red blood cells is relatively reduced and the number of the other cells is increased by using a phenomenon which occurs in actual blood vessels in which small particles gather in the inner part of the blood vessels and large particles move outside. The latter is a principle whereby a channel along which fluid flows has an expanded tube section to gather large particles and small particles outside and in the middle of the channel, respectively, according to Reynolds number. However, it is difficult to selectively separate a desired target cell from actual blood by using this principle, and there is limitation in treating a volume of several ml because the fluid flow rate is slow. However, it is necessary to dilute a fluid by several hundred times in order to control the Reynolds number, and thus there is a limitation in that samples of several hundred ml should be actually treated.

Accordingly, although the related art may be used, there still remains a need for a method of efficiently separating a target cell in a biological sample.
US 2003/124,719 A1 discloses a method for separating a first population of cells from a second population of cells in a sample by discontinuous density gradient separation using dense particles to target the first population of cells and a density separation medium that is at least about 0.001 g/cm³ higher than the density of the second population of cells.
US 5,840,502 A refers to methods of enriching for desired cell population from cell sources, such as body fluids, dispersed tissue specimens and cultured cells. In particular, the present invention relates to the use of a cell-trap centrifugation tube containing a specific density gradient solution adjusted to the specific density of a desired cell population to enrich for the desired cell from a cell source. The tube allows the desired cell population to be collected by decantation after centrifugation to minimize cell loss and maximize efficiency. In addition, the method can be further simplified by density-adjusted cell sorting which uses cell type-specific binding agents such as antibodies and lectins linked to carrier particles to impart a different density to the undesired populations in a more convenient manner. The rapid cell enrichment method described herein has a wide range of diagnostic and therapeutic applications. US 5,474,687 A relates to methods of enriching hematopoietic progenitor cells from body fluids. In particular, it relates to the use of a cell-trap centrifugation tube containing a gradient solution adjusted to a specific density to enrich for CD34+ cells from apheresed blood. The tube allows the desired cell population to be collected by decantation after centrifugation to minimize cell loss and maximize efficiency. In addition, the method can be further simplified by density-adjusted cell sorting which uses cell type-specific binding agents such as antibodies and lectins linked to carrier particles to impart a different density to undesired cell populations allowing the progenitor cells to be separated during centrifugation in a more convenient manner. The rapid progenitor cell enrichment method described herein has a wide range of applications, including but not limited to, donor cell preparation for bone marrow transplantation without the use of invasive procedures such as bone marrow aspiration.

### SUMMARY

Provided are methods of separating a target cell in a biological sample

In an embodiment, the method is a method of separating a circulating tumor cell from a biological sample comprising a white blood cell, the method comprising: contacting the biological sample comprising the circulating tumor cell and the white blood cell with a particle to which a ligand specific to a surface marker of the circulating tumor cell is bound, wherein the surface marker is selected from the group consisting of mucin 1 (MUC 1), epithelial cell adhesion molecule (EpCAM), c-Met, Her2, EGFR, or any combination thereof; allowing the ligand bound to the particle to specifically bind to the surface marker of the circulating tumor cell to form a particle-circulating tumor cell complex, wherein the particle-circulating tumor cell complex has a density that is different from the density of the white blood cell and the density difference of the particle-circulating tumor cell complex from that of the white blood cell is in a range of about 0.005 g/cm³ to about 0.05 g/cm³; and separating the white blood cell from the particle-circulating tumor cell complex by density gradient centrifugation.

Additional aspects will be set forth in part in the description which follows and, in part, will be apparent from the description, or may be learned by practice of the presented embodiments.

### BRIEF DESCRIPTION OF THE DRAWINGS

These and/or other aspects will become apparent and more readily appreciated from the following description of the embodiments, taken in conjunction with the accompanying drawings of which:
FIG. 1 illustrates results of flow cytometric analysis of Human EpCAM/TROP1 Fluorescein MAb (anti-EPCAM MAb) according to an exemplary embodiment;
FIG. 2 is a set of images showing the results of agglutination reactions between a particle with bound anti-EPCAM MAb and a breast cancer cell line, the images of panels (A) and (B) show results of control agglutination reactions between a particle without the bound anti-EPCAM MAb and the breast cancer cell line; and
FIG. 3 is a photograph illustrating results of separation of cancer cells in blood by density gradient centrifugation according to an exemplary embodiment.
FIG. 4 is a photograph illustrating results of separation of cancer cells in blood by centrifugation and filtration according to an exemplary embodiment.

### DETAILED DESCRIPTION

Methods of separating a target cell in a biological sample are disclosed herein. The methods disclosed herein are in particular directed to separate a target cell from other second cells in a biological sample, when the target cell and the second cells have a similar size or density. The methods disclosed herein are preferably directed to separate tumor and cancer cells from blood cells.

Disclosed herewith is a method of separating a target cell in a biological sample includes contacting a particle, to which at least one ligand specific to a surface marker of a target cell is bound, with a biological sample including the target cell and at least one of a second type of cell; allowing the at least one ligand bound to the particle to specifically bind to the surface marker of the target cell to form a particle-target cell complex, wherein the particle-target cell complex has a density that is different from the density of the at least one second cell; and separating the second cell from the particle-target cell complex by density gradient centrifugation. The second type of cell is a white blood cell and the target cell is a circulating tumor cell.

The method of separating a target cell in a biological sample will be described in detail for each step thereof.

First, the method may include contacting a particle, to which is bound at least one ligand specific to a surface marker of a target cell is bound with a biological sample including the target cell and a second cell. The second cell has a density different from that of the particle-target cell complex.

The density difference between the particle target cell complex and the second cell is a range of about 0.005 g/cm³ to about 0.05 g/cm³.

The particle has a surface, to which a ligand specific to a surface marker of a target cell is bound. The surface marker is mucin 1 (MUC 1), epithelial cell adhesion molecule (EpCAM), c-Met, Her2, EGFR,
or any combinations thereof. In addition, the at least one ligand specific to the surface marker may be an antibody which may bind specifically to the antigen protein.

The ligand is bound to the surface of the particle. For example, when the ligand is an antibody, the constant region of the antibody may be bound to the surface of the particle such that the antigen-binding site may be exposed to the outside. Accordingly, because the ligand bound to the particle binds specifically to a surface marker of the target cell, the particle may be bound specifically to the target cell, via the ligand-surface marker interaction, to permit separation of the particle-target cell complex from the second cell.

The target cell is a circulating tumor cell. The circulating tumor cell may be from a cancer selected from the group consisting of bladder cancer, breast cancer, cervical cancer, cholangiocarcinoma cancer, colorectal cancer, endometrial cancer, esophageal cancer, gastric cancer, head and neck cancer, kidney cancer, liver cancer, lung cancer, nasopharyngeal cancer, ovarian cancer, pancreatic cancer, gallbladder cancer, prostate cancer, thyroid cancer, osteosarcoma, synovial sarcoma, rhabdomyosarcoma, synovial sarcoma, Kaposi's sarcoma, leiomyosarcoma, malignant fibrous histocytoma, fibrosarcoma, adult T-cell leukemia, lymphoma, multiple myeloma, glioblastoma/astrocytoma, melanoma, mesothelioma, and Wilms' tumor.

The particle alters the density of a target cell by binding to the target cell via the ligand specific to the surface marker of the target cell to form a particle-target cell complex. Thus, the particle has a density value which causes a difference in density between the particle-target cell complex in the biological sample and the second cell. For example, when the biological sample is blood in which a cancer cell is the target cell, the densities of white blood cells and red blood cells are about 1.07 g/cm³ and about 1.1 g/cm³, respectively. Therefore, the kind of particle may be selected to have a density such that the density of the particle-target cell complex will permit the target cell, in the form of the particle-target cell complex, to separate from the white blood cells and the red blood cells in density gradient centrifugation. The particle may be made of any suitable polymer. The particle according to an exemplary embodiment may be selected from the group consisting of a polystyrene particle, a polymethylmethacrylate particle, a latex particle, an ABS (tert-polymer of acrylonitrile, butadiene, and styrene) particle, a cyclic olefin copolymer particle, melamine particle, magnetic particle and a complex thereof, but the particle is not limited to particles of these specific polymers. However, liposomal particles are excluded as particles in the method disclosed herein.

According to an exemplary embodiment, the diameter of the particle may be variously selected according to the kind of target cell to be separated. and the type of particle to be used. The diameter may be, for example, about 1 nm to about 100 µm, or about 10 nm to about 10 µm.

According to an exemplary embodiment, the density of the particle may be selected from various ranges depending on the target cell and the biological sample. For example, when a circulating cancer cell is the target cell to be separated in blood, the density of the particle may be greater than or equal to about 1.0 g/cm³ and less than or equal to about 2.0 g/cm³, or greater than or equal to about 1.3 g/cm³ and less than or equal to about 1.7 g/cm³, or greater than or equal to about 1.4 g/cm³ and less than or equal to about 1.6 g/cm³.

According to an exemplary embodiment, the biological sample may be any biological sample in which the target cell may be present. For example, the sample may be selected from the group consisting of a biopsy sample, a tissue sample, a cell suspension including a separated cell suspended in a liquid medium, a cell culture, and any combinations thereof. The sample may be selected from the group consisting of blood, marrow fluid, saliva, lacrimal fluid, urine, semen, mucous fluid, and any combinations thereof. For example, in order to separate CTCs, blood may be used as the biological sample.

The biological sample includes a target cell and a second cell. The second cell, here a white blood cell, has a density difference of, for example, about 0.005 g/cm³ to about 0.05 g/cm³ with the particle-circulating tumor cell complex. That is, the target cell may be specifically separated from among the two or more kinds of cells in the biological sample, all having a similar or identical density, by the method of separating a target cell according to an exemplary embodiment disclosed herein. Accordingly, when the density difference between the target cell and the second cells in a biological sample is so small that density gradient centrifugation of the sample does not result in separate layers for each type of cell, the separation method disclosed herein may be used. A hemocyte such as a white blood cell or a red blood cell is present in a blood sample including circulating tumor cells (CTCs), and the density of circulating tumor cells is similar to that of white blood cells in the blood sample and thus the circulating tumor cells may not be separated from the white blood cells by density gradient centrifugation. Accordingly, the apparent density of the circulating tumor cells may be altered by using the above-mentioned method to form a particle-CTC complex, and thus the circulating tumor cells may be separated as particle-CTC complexes from other hemocyte cells by density gradient centrifugation.

The contacting is performed by adding a particle having a ligand specific to a surface marker of the target cell bound thereto, to a solution including the biological sample.

According to an exemplary embodiment, the method may further include, before the contacting, pre-treating the biological sample. For example, the pre-treatment may be performed to reduce the amount or remove materials other than cells from the sample. The pre-treatment may be selected from the group consisting of centrifugation, filtration, chromatography such as affinity chromatography, and any combinations thereof. For example, when the biological sample is blood, plasma may be removed from the blood sample in a pre-treatment step so that only proteins and cells remain in the sample. The proteins may be also removed from the blood sample, so that only the cells in the blood remain in the sample that may be used in the method disclosed herein. The cells remaining in the sample include the target cells and the second cells, i.e. cells other than the target cell originally present in the biological sample.

According to an exemplary embodiment, the particle may be coated with a compound having a charge on the surface in order to permit binding to the ligand specific to the surface marker of the target cell. The compound having the charge may be a compound having a functional group selected from the group consisting of an amine group, an imine group, and any combinations thereof, but it is not limited thereto.

Subsequently, the method includes allowing the ligand bound to the particle to specifically bind to the surface marker of the target cell to form a particle-target cell complex.

Contacting the biological sample with the particle positions the particle in proximity to target cell. Subsequently, the ligand bound to the particle may specifically bind to the surface marker which is present on the surface of the target cell. For example, when an antibody specific for EpCAM and/or C-Met is used as the ligand, the ligand can specifically bind to EpCAM and/or C-Met on circulating tumor cells. Thus, the particle via the ligand binding to the surface marker may form a complex with the target cell. The overall density of the complex is different from the density of the target cell itself. By forming the complex, the target cell thus "alters" its density and can be separated from other cells in a biological sample, which have the same density as or a density similar to that of the target cell prior to the complex function.

Finally, the method includes separating the second cell having the density difference with the particle-target cell complex by density gradient centrifugation.

The complex in the biological sample may be separated from other components of the biological sample according to a density value by density gradient centrifugation, as well known to the art. In particular, the complex may be separated by isopycnic separation in the present step. During centrifugation, sedimentation of a material continues until the density of the ambient medium and the density of the material are identical and thus a layer is formed at the isopycnic point. Therefore, isopycnic separation may be carried out with a range of gradient densities such that the density of the particle-target complex in the sample fall within that range and irrespective of the gradient length. Sufficient centrifugation time should be given such that the various kinds of cells included in the biological sample, including the complex, may band to a separated layer at their isopycnic point. For isopycnic separation, various media known in the art may be use, at various concentrations, depending on the biological sample to be applied. For example, the medium may include Ficoll, Percoll, Nycodenz, and the like, but it is not limited thereto. Since the complex has a density difference from other cells in the biological sample, which have a density similar or identical to that of the unbound target cell, a layer of the complex, separate from layers of the other cells in the biological sample, may be formed. The layer of the gradient with the complex may then be extracted automatically or manually from the gradient to be used according to the purpose of the experimenters.

According to another aspect disclosed therein, a method of separating a target cell in a biological sample includes contacting a particle, to which at least one ligand specific to a surface marker of a target cell with a biological sample including the target cell and at least one of a second type of cell is bound; allowing the at least one ligand bound to the particle to specifically bind to the surface marker of the target cell to form a particle-target cell complex, wherein the particle-target cell complex has a density and size that is different from the density and size of the second cell; and removing the rest portion, also called the bulk of the biological sample, from the particle-target cell complex by centrifugation. In other words, the separating comprises a centrifugation step followed by removing the centrifugation phase comprising the particle-target cell complex from the other centrifugation phase containing the bulk of the biological sample by centrifugation. The centrifugation phase may be like the pellet, for example in case of using a particle having a high density making the particle-target cell complex sediment during centrifugation or the supernatant, in case of a light particle with a low density making the complex float in the supernatant.

The method may further include, after the removing, separating the second cell, not removed by centrifugation, from the particle-target cell complex by filtration.

The step of contacting and complex formation are similar to the ones described in detail above.

The method may include, after forming a particle-target cell complex, removing the particle-target cell complex from the rest or bulk of the sample by centrifugation.

The centrifugation may be accomplished by any common method which can be used by one of ordinary skill in the art. The rest portion except the particle-target cell complex could be removed mainly by centrifugation. After this, the remaining portion including the particle-target cell complex may be applied to the filtration, if necessary, to separate the particle-target cell complex.

The filtration may be accomplished using a filter, for example. The density and volume of the particle-target cell complex are greater than the density and the volume of cells not forming the complex. Thus, the pore size of the filter may be greater than the diameter of the second cells and smaller than the diameter of the particle-target cell complex. For example, the pore size may be the range of about 3 µm to about 30 µm, about 5 µm to about 20 µm, or, about 8 µm to about 14 µm.

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

### Example 1: Manufacture of a particle to which an antibody specifically binding to EpCAM is bound

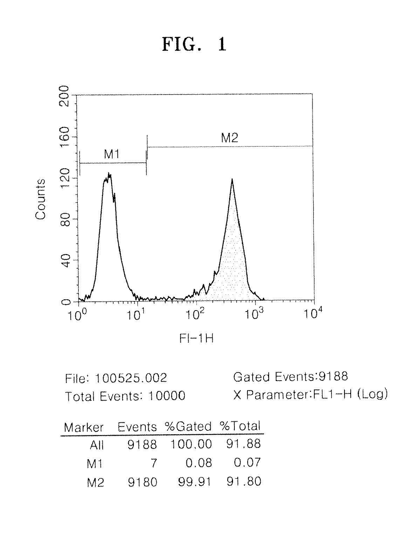

In a method of separating a target cell in a biological sample according to an exemplary embodiment, a breast cancer cell line MCF-7 (Korean Cell Line Bank) was used as the target cell to be separated. Accordingly, various kinds of commercially available antibodies were tested by flow cytometric analysis in order to select an antibody specifically binding to EpCAM in the target cell. As a result, a Human EpCAM/TROP1 Fluorescein monoclonal antibody MAb (Clone 158206), Mouse IgG2B (Cat. # FAB9601 F, R&D Systems, Inc.: hereinafter "anti-EPCAM MAb) was selected (FIG. 1). The anti-EPCAM antibody was allowed to bind to the particle using the following method.

Amine-modified polystyrene beads (Sigma-Aldrich) or melamine beads (Postnova) having a diameter of about 2 µm~3 µm were washed three times with phosphate buffered saline (PBS). Polymaleic acid having a carboxylic group activated with 1-ethyl-3(3-dimethyl aminopropyl)carbodiimide/ N-hydroxysuccinimide (EDC/NHS) was added to the beads and allowed to react with the beads at room temperature for about 1.5 hours while being stirred. Subsequently, the beads were washed three times with PBS buffer, again activated with EDC/NHS while being slowly stirred at room temperature for 20 minutes, followed by reaction with about 625 ug/mℓ of anti-EPCAM MAb for about 1.5 hours to obtain polystyrene particles or melamine particles to which the anti-EPCAM MAb was bound.

### Example 2: Agglutination experiment performed with the particle to which anti-EpCAM Mab is bound and a cancer cell

First, 20 µℓ of the polystyrene particles to which anti- EPCAM MAb is bound were added to a test tube. Then, 3 mℓ of blood including about 100 cells of the breast cancer cell line MCF-7 was added to the test tube and allowed to react at room temperature for about 1 hour while being slowly stirred. The blood was from a normal patient, obtained in accordance with regulations of the Institutional Review Board at Yonsei University College of Medicine. Subsequently, particles showing fluorescence due to the fluorescein bound to the antibody were observed by using a fluorescent microscope (Olympus IX81). In addition, polystyrene beads without the antibody were used as a control in an experiment performed in the same manner.

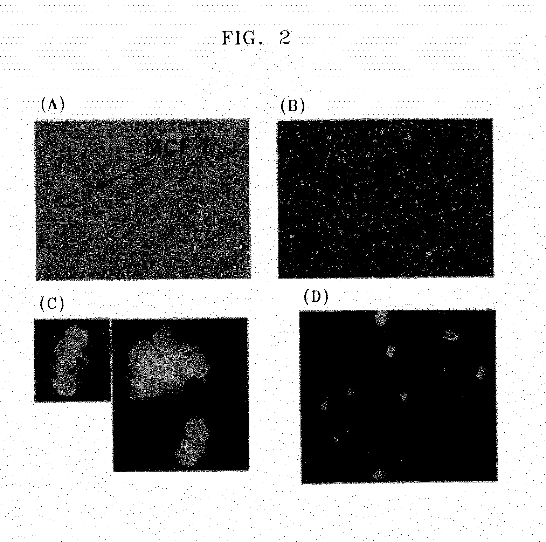

Results are shown in FIG. 2. Polystyrene beads without bound antibody were not bound to the breast cancer cells (FIG. 2 (A)) and did not show any non-specific binding (FIG. 2 (B)). In contrast, polystyrene beads with bound anti-EpCAM MAb were bound to the surface of the breast cancer cell (FIGS. 2 (C) and (D)), as shown by the degree of fluorescence observed.

### Example 3: Separation Experiment performed on cancer cells in blood using density gradient centrifugation

Since white blood cells and circulating cancer cells are similar in terms of physical properties, it is known that they may separate in the same layer when density gradient centrifugation is performed. Accordingly, an experiment for separating only cancer cells in blood was performed in the present Example. The polystyrene particles with bound anti-EpCAM Mab were allowed to bind to cancer cells in the blood, producing a difference in density between the cancer cell-polystyrene particle complex and the white blood cells.

First, 4 mℓ of a normal patient's blood, obtained in accordance with regulations of the Institutional Review Board at Yonsei University College of Medicine, was added to a test tube and then spiked with 100 cells of the breast cancer cell line MCF-7. About 20 ul (4.5 x 10⁸ ea) of polystyrene particles with bound anti-EpCAM MAb were added to the test tube, and incubated for about 1 hour. Subsequently, about 3 mℓ of 100% Ficoll was injected into a 15 mℓ tube, to which the reaction was loaded, followed by centrifugation at 400 x g conditions for about 20 minutes.

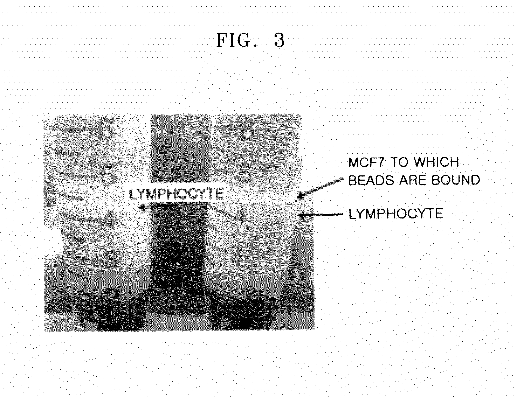

As shown in FIG. 3, during centrifugation, the cancer cells bound to the polystyrene particles with the bound anti-EpCAM MAb formed a layer in a portion of the density gradient above the layer formed by the lymphocytes. The density of the polystyrene particles used in the experiment was about 1.05 g/cm³, which was a value smaller than that of lymphocytes (about 1.07 g/cm³). Even though the number of the cancer cells in the blood sample was small, the cancer cells were separated from the lymphocytes due to the density difference induced by the polystyrene particles to which the cancer cells were bound. Thus, even when only a small quantity of the target cell is present in a biological sample, the method of separating the target cell from other cells in the sample, according to an exemplary embodiment of the invention, permits effective separation of the target cell.

### Example 4: Separation Experiment performed on cancer cells in blood by centrifugation and filtration

An experiment for separating only cancer cells in blood was performed in the present Example. The melamine particles with bound anti-EpCAM Mab were allowed to bind to cancer cells in the blood, followed by separating the cancer cell-melamine particle complex from the white blood cells and the red blood cells by centrifugation and filtration.

First, 4 mℓ of a normal patient's blood, obtained in accordance with regulations of the Institutional Review Board at Yonsei University College of Medicine, was added to a test tube and then spiked with 100 cells of the breast cancer cell line MCF-7. About 100 ul (1.0 x 10⁵ ea) of melamine particles with bound anti-EpCAM MAb were added to the test tube, and incubated for about 1 hour. Subsequently, about 3 mℓ of Density gradient Ficoll Paque (Oslo) was injected into a 15 mℓ tube, to which the reaction was loaded, followed by centrifugation at 400 x g conditions for about 10 minutes.

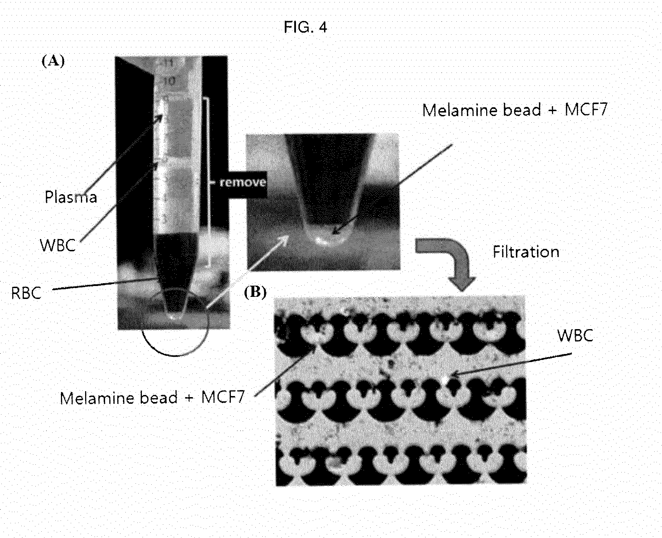

As shown in FIG. 4(A), the cells, such as the white blood cells or the red blood cells, which have lower density than the cancer cell-melamine particle complex were separated in the upper portion of the tube, whereas, the cancer cells bound to the melamine particles with the bound anti-EpCAM MAb were separated in the bottom end of the tube. The upper portion was removed, followed by passing the resultant through a filter having a pore size of 8~14 µm. After the filtration, the filter was examined using fluorescent microscope (Olympus). As shown in FIG. 4(B), it was identified that the cancer cell-melamine particle complex was easily separated by filtration from other cells in the resultant because the complex was increased in size and density compared with other cells in the blood.

A target cell may be efficiently separated from a biological sample including at least one other type of cell which is similar in density and/or size to the target cell by the method of separating a target cell in a biological sample according to an exemplary embodiment disclosed herein.

The terminology used herein is for the purpose of describing particular embodiments only and is not intended to be limiting of the invention. The terms "a" and "an" do not denote a limitation of quantity, but rather denote the presence of at least one of the referenced item. The terms "comprising", "having", "including", and "containing" are to be construed as open-ended terms (i.e. meaning "including, but not limited to").

Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable.

All methods described herein can be performed in a suitable order unless otherwise indicated herein or otherwise clearly contradicted by context. No language in the specification should be construed as indicating any non-claimed element as essential to the practice of the invention as used herein.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A method of separating a circulating tumor cell from a biological sample comprising a white blood cell, the method comprising:
contacting the biological sample comprising the circulating tumor cell and the white blood cell with a particle to which a ligand specific to a surface marker of the circulating tumor cell is bound, wherein the surface marker is selected from the group consisting of mucin 1 (MUC 1), epithelial cell adhesion molecule (EpCAM), c-Met, Her2, EGFR, or any combination thereof;
allowing the ligand bound to the particle to specifically bind to the surface marker of the circulating tumor cell to form a particle-circulating tumor cell complex,
wherein the particle-circulating tumor cell complex has a density that is different from the density of the white blood cell and the density difference of the particle-circulating tumor cell complex from that of the white blood cell is in a range of about 0.005 g/cm³ to about 0.05 g/cm³ and
separating the white blood cell from the particle-circulating tumor cell complex by density gradient centrifugation.

2. A method of claim 1, wherein
the separating comprising a centrifugation step followed by removing the centrifugation phase comprising the particle-circulating tumor cell complex from the other centrifugation phase containing the bulk of the biological sample by centrifugation.

3. The method of claim 2, further comprising,
after the removing, separating the white blood cell, remaining in the centrifugation phase comprising the particle-circulating tumor cell complex, from the particle-circulating tumor cell complex by filtration.

4. The method of any one of claims 1 to 3, wherein the circulating tumor cell is a circulating tumor cell from a cancer selected from the group consisting of bladder cancer, breast cancer, cervical cancer, cholangiocarcinoma cancer, colorectal cancer, endometrial cancer, esophageal cancer, gastric cancer, head and neck cancer, kidney cancer, liver cancer, lung cancer, nasopharyngeal cancer, ovarian cancer, pancreatic cancer, gallbladder cancer, prostate cancer, thyroid cancer, osteosarcoma, synovial sarcoma, rhabdomyosarcoma, synovial sarcoma, Kaposi's sarcoma, leiomyosarcoma, malignant fibrous histocytoma, fibrosarcoma, adult T-cell leukemia, lymphoma, multiple myeloma, glioblastoma/astrocytoma, melanoma, mesothelioma, and Wilms' tumor.

5. The method of any one of claims 1 to 4, further comprising,
before the contacting, pre-treating the biological sample to reduce the amount of material other than the circulating tumor cell and the white blood cell in the biological sample.

6. The method of any one of claims 1 to 5, wherein the biological sample is selected from the group consisting of blood, marrow fluid, saliva, lacrimal fluid, urine, semen, mucous fluid, and any combination thereof.

7. The method of any one of claims 1 to 6, wherein the particle has a density greater than or equal to about 1.0 g/cm³ and less than or equal to about 2.0 g/cm³.

8. The method of any one of claims 1 to 7, wherein the particle is selected from the group consisting of a polystyrene particle, a polymethylmethacrylate particle, a latex particle, an ABS (tert-polymer of acrylonitrile, butadiene, and styrene) particle, a cyclic olefin copolymer particle, melamine particle, magnetic particle and a combination thereof.

9. The method of any one of claims 1 to 8, wherein the particle has a diameter of about 10 nm to about 10 µm.

## Patentansprüche

1. Ein Verfahren zur Trennung einer zirkulierenden Tumorzelle von einer biologischen Probe, welches ein weißes Blutkörperchen umfasst, wobei das Verfahren folgendes umfasst:
Inkontaktbringen der biologischen Probe, welche die zirkulierende Tumorzelle und das weiße Blutkörperchen umfasst mit einem Partikel, an das ein für ein Oberflächenmarker einer zirkulierenden Tumorzelle spezifischer Ligand gebunden ist, wobei der Oberflächenmarker aus der Gruppe bestehend aus Muzin-1 (MUC 1), epitheliales Zell-Adhäsionsmolekül (EpCam), c-Met, Her2, EGFR oder irgendeiner Kombination dessen ausgewählt wird;
Ermöglichen des an den Partikel gebundenen Liganden spezifisch an den Oberflächenmarker der zirkulierenden Tumorzelle zu binden, um einen Partikel-zirkulierende Tumorzelle-Komplex zu bilden;
wobei der Partikel-zirkulierende Tumorzelle-Komplex eine Dichte besitzt, die von der Dichte des weißen Blutkörperchens abweicht und der Dichteunterschied zwischen dem Partikel-zirkulierende Tumorzelle-Komplex und des weißen Blutkörperchens in der Größenordnung von etwa 0.005 g/cm³ bis zu etwa 0.05 g/cm³ beträgt; und
Trennung des weißen Blutkörperchens von dem Partikel-zirkulierende Tumorzelle-Komplex durch Dichtegradientenzentrifugation.

2. Das Verfahren nach Anspruch 1, wobei die Trennung einen Zentrifugationsschritt umfasst, gefolgt von der Beseitigung durch Zentrifugation der Zentrifugationsphase, welche den Partikel-zirkulierende Tumorzelle-Komplex umfasst von der anderen Zentrifugationsphase, welche den Großteil der biologischen Probe umfasst.

3. Das Verfahren nach Anspruch 2, desweiteren umfassend,
nach der Beseitigung, eine Trennung durch Filtration des weißen Blutkörperchens, welches in der Zentrifugationsphase, das den Partikel-zirkulierende Tumorzelle-Komplex enthält, verblieben war, von dem Partikel-zirkulierende Zelle-Komplex.

4. Das Verfahren nach einem der Ansprüche 1 bis 3, wobei die zirkulierende Tumorzelle eine Tumorzelle von einem Krebs, ausgewählt aus der Gruppe bestehend aus Blasenkrebs, Brustkrebs, Gebärmutterhalskrebs, Gallengangskarzinom, Darmkrebs, Gebärmutterkrebs, Speiseröhrenkrebs, Magenkrebs, Kopf- und Halskrebs, Nierenkrebs, Leberkrebs, Lungenkrebs, Nasenrachenkrebs, Eierstockkrebs, Bauchspeicheldrüsenkrebs, Gallenblasenkrebs, Prostatakrebs, Schilddrüsenkrebs, Osteosarkom, Synovialsarkom, Rhabdomyosarkom, Synovialsarkom , Kaposi-Sarkom, Leiomyosarkom, malignes fibröses Histozytoma, Fibrosarkom, erwachsene T-Zellen-Leukämie, Lymphom, multiples Myelom, Glioblastom / Astrozytom, Melanom, Mesotheliom und Wilms-Tumor ist.

5. Das Verfahren nach einem der Ansprüche 1 bis 4, weiterhin umfassend, eine Vorbehandlung der biologischen Probe vor dem Inkontaktbringen, um die Menge an Material außer der zirkulierenden Tumorzelle und des weißen Blutkörperchens in der biologischen Probe zu verringern.

6. Verfahren nach einem der Ansprüche 1 bis 5, wobei die biologische Probe aus der Gruppe bestehend aus Blut, Markflüssigkeit, Speichel, Tränenflüssigkeit, Urin, Samenflüssigkeit, Schleim und irgendeiner Kombination davon ausgewählt wird.

7. Das Verfahren nach einem der Ansprüche 1 bis 6, wobei der Partikel eine Dichte von mehr als oder gleich zu etwa 1.0 g/cm³ und weniger als oder gleich zu etwa 2,0 g/cm³ besitzt.

8. Das Verfahren nach einem der Ansprüche 1 bis 7, wobei der Partikel aus der Gruppe bestehend aus einem Polystyrol-Partikel, einem Polymethylmethacrylat Partikel, einem Latexpartikel, einem ABS (tert-Polymer aus Acrylnitril, Butadien und Styrol)-Partikel, einem Cycloolefincopolymer-Partikel, einem Melaminpartikel, Magnetpartikel und einer Kombination davon, ausgewählt wird.

9. Verfahren nach einem der Ansprüche 1 bis 8, wobei der Partikel einen Durchmesser von etwa 10 nm bis etwa 10 µm hat.

## Revendications

1. Procédé de séparation d'une cellule tumorale circulante d'un échantillon biologique comprenant un globule blanc, le procédé comprenant :
la mise en contact de l'échantillon biologique comprenant la cellule tumorale circulante et le globule blanc avec une particule à laquelle un ligand spécifique d'un marqueur de surface de la cellule tumorale circulante est lié, le marqueur de surface étant sélectionné dans le groupe constitué de la mucine 1 (MUC 1), de la molécule d'adhérence cellulaire épithéliale (EpCAM), de c-Met, de Her2, d'EGFR, ou de n'importe quelle combinaison de celles-ci ;
le fait de permettre au ligand de se lier à la particule pour se lier spécifiquement au marqueur de surface de la cellule tumorale circulante pour former un complexe particule-cellule tumorale circulante,
le complexe particule-cellule tumorale circulante ayant une densité qui est différente de la densité du globule blanc et la différence de densité du complexe particule-cellule tumorale circulante par rapport à celle du globule blanc se situant dans la plage d'environ 0,005 g/cm³ à environ 0,05 g/cm³ ; et
la séparation du globule blanc du complexe particule-cellule tumorale circulante par centrifugation à gradient de densité.

2. Procédé selon la revendication 1,
la séparation comprenant une étape de centrifugation suivie de l'élimination de la phase de centrifugation comprenant le complexe particule-cellule tumorale circulante de l'autre phase de centrifugation contenant la masse de l'échantillon biologique par centrifugation.

3. Procédé selon la revendication 2, comprenant en outre,
après l'élimination, la séparation du globule blanc, demeurant dans la phase de centrifugation comprenant le complexe particule-cellule tumorale circulante, du complexe particule-cellule tumorale circulante par filtration.

4. Procédé selon l'une quelconque des revendications 1 à 3, la cellule tumorale circulante étant une cellule tumorale circulante issue d'un cancer sélectionné dans le groupe constitué du cancer de la vessie, du cancer du sein, du cancer du col de l'utérus, du cholangiome malin, du cancer colorectal, du cancer de l'endomètre, du cancer de l'oesophage, du cancer gastrique, du cancer de la tête et du cou, du cancer du rein, du cancer du foie, du cancer du poumon, du cancer du nasopharynx, du cancer de l'ovaire, du cancer pancréatique, du cancer de la vésicule biliaire, du cancer de la prostate, du cancer de la thyroïde, de l'ostéosarcome, du sarcome synovial, du rhabdomyosarcome, du synovial sarcome, du sarcome de Kaposi, du léiomyosarcome, de l'histiocytome fibreux malin, du fibrosarcome, de la leucémie à cellules T de l'adulte, du lymphome, du myélome multiple, du glioblastome/astrocytome, du mélanome, du mésothéliome, et de la tumeur de Wilms.

5. Procédé selon l'une quelconque des revendications 1 à 4, comprenant en outre,
avant la mise en contact, le prétraitement de l'échantillon biologique pour réduire la quantité de matériau autre que la cellule tumorale circulante et le globule blanc dans l'échantillon biologique.

6. Procédé selon l'une quelconque des revendications 1 à 5, l'échantillon biologique étant sélectionné dans le groupe constitué du sang, du liquide céphalo-rachidien, de la salive, du liquide lacrymal, de l'urine, du sperme, du liquide muqueux, et de n'importe quelle combinaison de ceux-ci.

7. Procédé selon l'une quelconque des revendications 1 à 6, la particule ayant une densité supérieure ou égale à environ 1,0 g/cm³ et inférieure ou égale à environ 2,0 g/cm³.

8. Procédé selon l'une quelconque des revendications 1 à 7, la particule étant sélectionnée dans le groupe constitué d'une particule de polystyrène, d'une particule de méthacrylate de polyméthyle, d'une particule de latex, d'une particule d'ABS (*tert*-polymère d'acrylonitrile, butadiène, et styrène), d'une particule copolymère d'oléfine cyclique, d'une particule de mélamine, d'une particule magnétique et d'une combinaison de celles-ci.

9. Procédé selon l'une quelconque des revendications 1 à 8, la particule ayant un diamètre d'environ 10 nm à environ 10 µm.
